# EUROPEAN PATENT SPECIFICATION

(11) **EP 2 940 168 B1**
(45) Date of publication and mention of the grant of the patent: **19.04.2017**
(21) Application number: 15165731.9
(22) Date of filing: 29.04.2015
(51) Int. Cl.: C22C 21/00, A47J 36/02, A47J 27/00, H05B 6/12

(54) **FILM MADE OF AN ALLOY OF ALUMINUM AND IRON, USE OF SUCH MATERIAL IN COMBINATION WITH AN OSCILLATING MAGNETIC FIELD AND KITCHEN UTENSIL FOR INDUCTION COOKING, COMPRISING SUCH FILM**
SCHICHT AUS EINER LEGIERUNG AUS ALUMINIUM UND EISEN, VERWENDUNG SOLCH EINES MATERIALS IN KOMBINATION MIT EINEM OSZILLIERENDEN MAGNETFELD UND EINEM KÜCHENGERÄT ZUM INDUKTIONSKOCHEN MIT DIESER SCHICHT
FILM CONSTITUÉ D'UN ALLIAGE D'ALUMINIUM ET DE FER, UTILISATION DE CE MATÉRIAU EN COMBINAISON AVEC UN CHAMP MAGNÉTIQUE OSCILLANT ET USTENSILE DE CUISINE DE CUISSON PAR INDUCTION COMPRENANT UN TEL FILM

(30) Priority: 30.04.2014 IT MI20140801
(43) Date of publication of application: 04.11.2015
(73) Proprietor: Corrado, Ennio, 21010 Arsago Seprio (VA) (IT); Scandolara, Anna Maria, 21010 Arsago Seprio (VA) (IT)
(72) Inventor: Corrado, Ennio, 21010 ARSAGO SEPRIO (VA) (IT)
(74) Representative: Locatelli, Massimo

(56) References cited:
- WO-A1-2011/064455
- CN-A- 101 849 763
- CN-A- 102 920 349
- CN-Y- 201 150 477
- JP-A- 2003 290 030
- JP-A- 2008 279 083
- US-A- 4 564 001
- DATABASE CAPLUS [Online] CHEMICAL ABSTRACTS SERVICE, COLUMBUS, OHIO, US; XP002734702, Database accession no. 108:171820 & DEAN, R. J.; HAUSER, W.: "Production of high-quality aluminum foil", INTERNATIONAL JOURNAL OF MATERIALS & PRODUCT TECHNOLOGY, vol. 2, no. 3-4, 1 December 1987 (1987-12-01),
- R. MAHMUDI: "Yield point phenomenon in ultrafine-grained aluminium sheets", MATERIAL LETTERS, vol. 1, no. 101845-48-1 CA, 8 March 1994 (1994-03-08), XP002734703,
- R. MAHMUDI: "GRAIN BOUNDARY STRENGTHENING IN A FINE GRAINEDALUMINIUM ALLOY", SCRIPTA METALURGICA ET MATERIALIA, vol. 32, no. 5, 6 October 1994 (1994-10-06), XP002734704,
- V. RAGHAVAN: "Al-Fe-Ti", JOURNAL OF PHASE EQUILIBRIA, vol. 23, no. 4, 1 December 2002 (2002-12-01), pages 367-374, XP002734705,
- M. Palm , J. Lacaze: "Assessment of the Al-Fe-Ti system", Max-Planck-Institut für Eisenforschung GmbH Intermetallics, vol. 14, no. 10-11 30 March 2006 (2006-03-30), pages 1291-1303, XP002734706, DOI: 10.1016/j.intermet.2005.11.026 Retrieved from the Internet: URL:http://ac.els-cdn.com/S096697950600115 4/1-s2.0-S0966979506001154-main.pdf?_tid=2 a1eb042-a7aa-11e4-b00b-00000aacb360&acdnat =1422531182_88df682522b44655ca3bf27ef47a2e 15 [retrieved on 2014-01-19]

## Description

The present invention refers to an innovative material, based on aluminum-iron alloy, capable of being quickly heated when subjected to an oscillating magnetic field and thus effectively usable for obtaining, for example, pots or other kitchen utensils adapted for cooking on induction stoves.

As well known, induction stoves are essentially constituted by a coil (hidden beneath the cooking surface) within which an oscillating electric current is made to flow; such current produces a magnetic field, which is also oscillatable as a function of the current that generates it.

According to Faraday's law, the variations of the magnetic field flow over time produce an induced electromotive force. If a conductive metal object (e.g. a pot) comes to be situated within such oscillating magnetic field, the aforesaid induced electromotive force in turn generates induced currents (or eddy currents) that circulate inside the conductive metallic material. Due to the Joule effect, these induced currents dissipate energy in the form of heat, causing the heating of the metallic material that constitutes the pot.

In induction stoves, this is obtained by positioning the coils and adjusting the magnetic field in a manner such that the latter is extended above the cooking surface, affecting the area within which the pot is resting on the surface itself.

Of course, not all metallic materials are suitable for production of pots adapted to correctly work with the induction stoves. Indeed, it is necessary for the material to have a sufficiently low electrical resistance so to be a good conductor for the induced currents - but not too low, otherwise there would not be sufficient energy dissipation for heating the pot by Joule effect.

In the prior art, pots for induction cooking are therefore commonly used, which are made of steel or cast iron, generically made of materials of ferromagnetic type, which optimally satisfy the abovementioned requirements.

On the other hand, the kitchen utensil market often requires pots made of aluminum due to the advantages that this material brings, both in terms of lightness and in terms of thermal conductivity which is quite higher with respect to conventional steel pots. Nevertheless, aluminum is a material which, because of its too low electrical resistance, is not adapted to generate a satisfactory quantity of heat by Joule effect if crossed by the eddy currents caused by the magnetic field of the coils; hence it is not normally usable with the induction stoves.

In order to overcome this problem, a commonly employed solution is that of manufacturing aluminum pots with the bottom constituted by a double layer: a first layer (made of aluminum) represented by the normal bottom of the pot and a second layer of steel coupled (generally by means of very high pressure values) to the first layer, below it. One example of this pot type is described in the application WO 2011/064455 A1, where the pot also has the bottom externally covered by an aluminum film in order to protect the ferromagnetic material layer.

In this manner, the pot, once placed on the induction cooking surface, is recognized by the system as a pot made of ferromagnetic material, thereby activating the electric circuit of the coils positioned below the cooking surface and consequently generating the magnetic field.

The induced currents thus generated heat the steel layer, which transmits heat by conduction to the rest of the aluminum pot.

This solution, while valid from the standpoint of operation effectiveness, has a certain complexity with regard to the manufacturing of the pot and, consequently, a rather high cost.

Another type of kitchen utensils that normally cannot be used for induction cooking are pans and other containers made of glass or ceramic, since these are electrically insulating materials.

WO 2011/064455 discloses an aluminum film used for coating an induction heating cooking vessel bottom and/or walls having a thickness of 5-40 µm.

The general object of the present invention is to overcome the abovementioned drawbacks by providing a film made of an alloy of aluminum and iron, which can be heated by induction when used in combination with an oscillating magnetic field, in particular for manufacturing of pots and kitchen utensils suitable for cooking on induction stoves.

In light of such object, it was thought to devise, according to the invention, a film made of an alloy of aluminum and iron according to claim 1.

According to the invention, it was also thought to devise a pot for induction cooking, provided with a bottom and with a side wall defining an inner compartment, characterized in that at least its bottom is covered by said film made of aluminum-iron alloy. Still according to the invention, it was thought to use said film made of an aluminum-iron alloy in combination with an oscillating magnetic field for generating induced currents inside the film, which are adapted to cause a heating of the film itself by Joule-effect.

In order to clarify the explanation of the innovative principles of the present invention and its advantages with respect to the prior art, a possible embodiment applying such principles will be described hereinbelow, with the aid of the enclosed drawings. In the drawings:
Fig.1 represents a schematic and partial view of a film according to the invention.
Fig.2 represents a general view of a pot to which the film according to the invention is applied.
Fig.3 represents a section view of the pot of Fig.2.

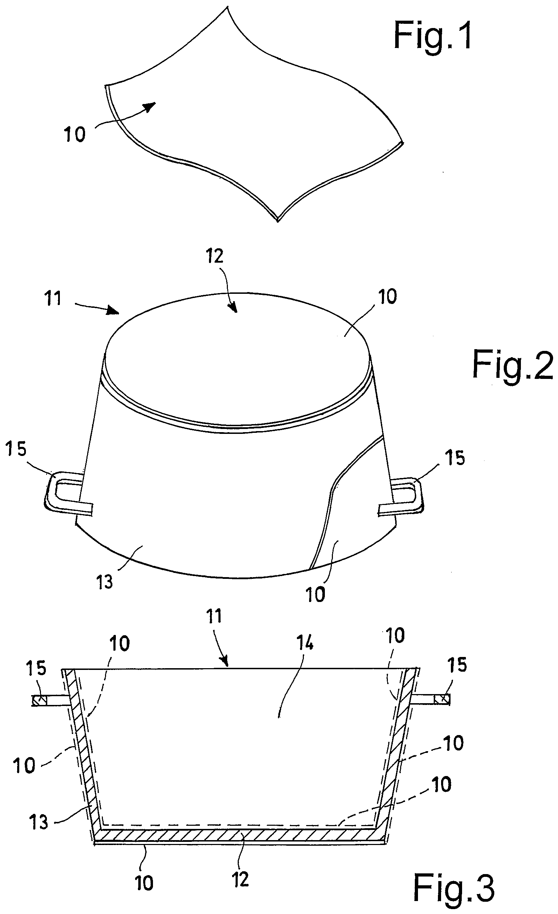

With reference to the figures, in Fig.1, a portion of a film 10 made of an alloy of aluminum and iron according to the invention is schematically illustrated.

For graphical reasons, in the figures the thickness of the film 10 was intentionally represented (for illustration purposes) much larger than actual thickness and not proportionate with respect to the other dimensions of the pot: indeed, as will be seen hereinbelow, the thickness of the film 10 is of micron magnitude and its actual representation would not be perceptible in the drawings.

The film according to the invention is made of an alloy of aluminum and iron, with aluminum present in an amount between 97% and 99% by weight with respect to the total weight of the alloy and iron present in an amount comprised between 1% and 2%, advantageously between 1% and 1.5%.

The alloy can also comprise titanium and/or boron, each in an amount not greater than 0.5%, advantageously comprised between 0.1% and 0.2%. These metals have the purpose of achieving a satisfactory refining of the alloy, enabling formation of smaller grains of substantially spherical form and improving the overall mechanical characteristics thereof.

Traces of other (metallic and non-metallic) elements can also be present, generally in an overall amount less than 0.1%.

The film made of an aluminum-iron alloy according to the invention has a thickness comprised between 5 µm and 100 µm, preferably between 5 µm and 10 µm, and is advantageously obtained by rolling, according to processes well-known to the person skilled in metallurgy.

Indeed, it has been surprisingly found that a film made of an aluminum-iron alloy with the composition indicated herein and a thickness less than 100 µm, if arranged within an oscillating magnetic field with suitable intensity, is capable of being heated (due to the induced currents generated therein) even several hundreds degrees in a few seconds.

Therefore, by suitably adjusting the power and intensity of the magnetic field, the film according to the invention can quickly reach the desired temperature value.

Illustrated in Fig.2 is a pot 11 provided with a bottom 12 and with a side wall 13 defining an inner compartment 14 adapted to contain liquid or solid substances intended to be heated. Advantageously, at the side wall 13, handles 15 can be present for user's grip. The handles 15 can be made of material that is not thermally conductive or with suitable thermal insulation from the body of the pot, as is well known to the person skilled in the art.

The pot advantageously has a flat bottom in order to provide optimal resting against the induction cooking surface.

The pot 11 can be made of any material suitable for heating and/or cooking of alimentary substances, foods or beverages, e.g. copper, ceramic, glass, etc., as well as of plastic materials capable of tolerating temperatures on the order of 180-200°C without being damaged and without releasing toxic substances. According to the invention, at least the bottom 12 of the pot is coated by the film 10 made of an aluminum-iron alloy having the above-described characteristics. When the magnetic field of an induction stove is activated, the currents induced within the film 10 heat the latter and this in turn transmits the heat to the material that constitutes the bottom 12 and the walls 13 of the pot.

In Fig.2, it is schematically illustrated (with a partial representation) how the film 10 can also be provided as a coating of the side wall 13 of the pot. The film 10 can advantageously be applied to the bottom and to the walls of the pot by means of glues or resins capable of tolerating operating temperatures between 180 and 200°C.

As shown in Fig.3 (with dashed line representation), the film 10 made of an aluminum-iron alloy according to the invention can be provided only at the external surface of the bottom 12 (and possibly at the side wall 13) or also (or only) at the internal surfaces.

The solution with external coating in any case represents the optimal solution because it avoids a possible damage of the film itself, which could occur (if present inside) if the content of the pot requires mixing or blending with spoons, forks etc., and because it allows the interior of the pot, which is in direct contact with the food to be heated or cooked, to be maintained in the material (copper, ceramic, glass, etc.) most suitable for the specific use.

A film made of an alloy of aluminum and iron according to the invention, applied to a pot made of copper, ceramic, glass, etc., assures the pot itself of ferromagnetic and electrical conductivity characteristics that render it suitable for operation with induction stoves, while maintaining all the peculiar characteristics of the materials that constitute the body of the pot.

At this point it is clear that, with a film made of an alloy of aluminum and iron according to the invention, and a pot at least partially coated with such film, the proposed objects are attained.

Naturally, the above-made description of an embodiment applying the innovative principles of the present invention is reported as an example of such innovative principles and must not therefore be taken as a limitation of the scope of the patent claimed herein.

In particular, the use of a film made of an alloy of aluminum and iron according to the invention, in combination with an oscillating magnetic field for generating induced currents inside the film itself, can also be applied in contexts outside the kitchen, e.g. if it is desired to achieve generic heating surfaces or elements.

Still within the field of pots, another possible use of a film made of an alloy of aluminum and iron according to the invention could consist of obtaining a separate bottom element, with diameter that can vary as a function of the size of the pots for which it is intended, constituted by a pair of discs made of non-ferromagnetic material (e.g. made of ceramic, glass or plastic), enclosing like a sandwich a film made of an aluminum-iron alloy according to the invention.

This element could be used in a simple and versatile manner by simply leaning it against the bottom of any already-existing pot, when it must be used with an induction stove. With this solution, it has been found that a pot full of water can be quickly brought to boiling temperature with an energy savings even greater than 30% with respect to conventional pots.

## Claims

1. Film made of an alloy of aluminum and iron, having a thickness comprised between 5 µm and 100 µm and made of an aluminum-iron alloy consisting of an aluminum amount comprised between 97% and 99% by weight with respect to the total weight of the alloy, an iron amount comprised between 1% and 2%, optionally titanium in an amount not greater than 0.5% by weight to the total, optionally boron in an amount not greater than 0.5% by weight to the total.

2. Film according to claim 1, **characterized in that** it has a thickness comprised between 5 µm and 10 µm.

3. Film according to claim 1, **characterized in that** iron is present in an amount comprised between 1% and 1.5%.

4. Film according to claim 1, **characterized in that** the content of titanium in the alloy is comprised between 0.1% and 0.2%.

5. Film according to claim 1, **characterized in that** the content of boron in the alloy is comprised between 0.1% and 0.2%.

6. Pot for induction cooking, provided with a bottom (12) and with a side wall (13) defining an inner compartment (14), **characterized in that** at least its bottom (12) is covered by a film (10) made of an alloy of aluminum and iron according to one or more of the preceding claims.

7. Pot for induction cooking according to claim 6, **characterized in that** the film (10) also covers the side wall (13) of the pot.

8. Pot for induction cooking according to one of claims 6 or 7, **characterized in that** the film (10) covers the pot externally.

9. Pot for induction cooking according to one of claims 6 or 7, **characterized in that** the film (10) is applied to the pot by means of glues or resins capable of tolerating operating temperatures between 180 and 200°C.

10. Pot for induction cooking according to claim 6, **characterized in that** the body of the pot is made of a material selected among copper, ceramic, glass or plastic materials.

11. Use of a film (10) made of an alloy of aluminum and iron according to one or more of claims 1-5, in combination with an oscillating magnetic field for generating induced currents inside the film, which are adapted to cause a heating of the film itself by Joule-effect.

12. Use of a film made of an alloy of aluminum and iron in combination with an oscillating magnetic field according to claim 11, wherein a discoid element, constituted by a pair of discs made of non-ferromagnetic material that enclose said film made of an alloy of aluminum and iron like a sandwich, is inserted inside a pot and leant against its bottom in order to constitute a heating element when it is situated inside an oscillating magnetic field.

## Patentansprüche

1. Schicht aus einer Legierung aus Aluminium und Eisen mit einer Dicke zwischen 5 µm und 100 µm, hergestellt aus einer Aluminium-Eisen-Legierung bestehend aus einer Aluminiummenge zwischen 97 Gew.-% und 99 Gew.-% in Bezug auf das Gesamtgewicht der Legierung, einer Eisenmenge zwischen 1 % und 2 %, wahlweise Titan in einer Menge von höchstens 0,5 Gew.-% bezogen auf das Gesamtgewicht, wahlweise Bor in einer Menge von höchstens 0,5 Gew.-% bezogen auf das Gesamtgewicht.

2. Schicht nach Anspruch 1, **dadurch gekennzeichnet, dass** sie eine Dicke zwischen 5 µm und 10 µm aufweist.

3. Schicht nach Anspruch 1, **dadurch gekennzeichnet, dass** das Eisen in einer Menge zwischen 1 % und 1,5 % vorhanden ist.

4. Schicht nach Anspruch 1, **dadurch gekennzeichnet, dass** der Gehalt an Titan in der Legierung zwischen 0,1 % und 0,2 % beträgt.

5. Schicht nach Anspruch 1, **dadurch gekennzeichnet, dass** der Gehalt an Bor in der Legierung zwischen 0,1 % und 0,2 % beträgt.

6. Topf zum Induktionskochen, versehen mit einem Boden (12) und einer Seitenwand (13), die eine innere Kammer (14) definieren, **dadurch gekennzeichnet, dass** wenigstens der Boden (12) mit einer Schicht (10) bedeckt ist, die aus einer Legierung aus Aluminium und Eisen nach einem oder mehreren der vorstehenden Ansprüche hergestellt ist.

7. Topf zum Induktionskochen nach Anspruch 6, **dadurch gekennzeichnet, dass** die Schicht (10) auch die Seitenwand (13) des Topfes bedeckt.

8. Topf zum Induktionskochen nach einem der Ansprüche 6 oder 7, **dadurch gekennzeichnet, dass** die Schicht (10) den Topf außenseitig bedeckt.

9. Topf zum Induktionskochen nach einem der Ansprüche 6 oder 7, **dadurch gekennzeichnet, dass** die Schicht (10) mittels Klebstoffen oder Harzen an den Topf aufgebracht wird, die in der Lage sind, Betriebstemperaturen zwischen 180 und 200°C zu widerstehen.

10. Topf zum Induktionskochen nach Anspruch 6, **dadurch gekennzeichnet, dass** der Topfkörper aus einem Material hergestellt ist, das ausgewählt ist aus Kupfer, Keramik, Glas oder Kunststoffen.

11. Verwendung einer Schicht (10) aus einer Legierung aus Aluminium und Eisen nach einem oder mehreren der Ansprüche 1 bis 5 in Kombination mit einem oszillierenden Magnetfeld zur Erzeugung von Induktionsströmen innerhalb der Schicht, die dazu geeignet sind, eine Erwärmung der Schicht durch Joule-Effekt zu bewirken.

12. Verwendung einer Schicht aus einer Legierung aus Aluminium und Eisen in Kombination mit einem oszillierenden Magnetfeld nach Anspruch 11, wobei ein scheibenförmiges Element, bestehend aus einem Paar von Scheiben aus nichtferromagnetischem Material, welche die Schicht aus einer Legierung aus Aluminium und Eisen wie ein Sandwich einschließen, in das Innere eines Topfes eingefügt und gegen dessen Boden angelehnt ist, um ein Heizelement zu bilden, wenn es sich innerhalb eines oszillierenden Magnetfeldes befindet.

## Revendications

1. Film constitué d'un alliage d'aluminium et de fer, ayant une épaisseur comprise entre 5 µm et 100 µm et constitué d'un alliage aluminium-fer composé d'une teneur en aluminium comprise entre 97% et 99% en poids par rapport au poids total de l'alliage, une teneur en fer comprise entre 1% et 2%, facultativement du titane dans une quantité non supérieure à 0,5% en poids par rapport au total, facultativement du bore dans une quantité non supérieure à 0,5% en poids par rapport au total.

2. Film selon la revendication 1, **caractérisé en ce qu'**il a une épaisseur comprise entre 5 µm et 10 µm.

3. Film selon la revendication 1, **caractérisé en ce que** le fer est présent dans une quantité comprise entre 1% et 1,5%.

4. Film selon la revendication 1, **caractérisé en ce que** la teneur en titane dans l'alliage est comprise entre 0,1% et 0,2%.

5. Film selon la revendication 1, **caractérisé en ce que** la teneur en bore dans l'alliage est comprise entre 0,1% et 0,2%.

6. Récipient pour la cuisson par induction, muni d'un fond (12) et avec une paroi latérale (13) définissant un compartiment intérieur (14), **caractérisé en ce qu'**au moins son fond (12) est recouvert par un film (10) constitué d'un alliage d'aluminium et de fer selon une ou plusieurs des revendications précédentes.

7. Récipient pour la cuisson par induction selon la revendication 6, **caractérisé en ce que** le film (10) recouvre également la paroi latérale (13) du récipient.

8. Récipient pour la cuisson par induction selon une des revendications 6 ou 7, **caractérisé en ce que** le film (10) recouvre le récipient extérieurement.

9. Récipient pour la cuisson par induction selon une des revendications 6 ou 7, **caractérisé en ce que** le film (10) est appliqué au récipient au moyen de colles ou résines capables de supporter des températures de fonctionnement entre 180 et 200°C.

10. Récipient pour la cuisson par induction selon la revendication 6, **caractérisé en ce que** le corps du récipient est constitué d'un matériau sélectionné parmi le cuivre, la céramique, le verre ou des matériaux plastiques.

11. Utilisation d'un film (10) constitué d'un alliage d'aluminium et de fer selon une ou plusieurs des revendications 1 à 5, en combinaison avec un champ magnétique oscillant pour générer des courants induits à l'intérieur du film, qui sont adaptés pour provoquer un réchauffement du film lui-même par effet Joule.

12. Utilisation d'un film constitué d'un alliage d'aluminium et de fer en combinaison avec un champ magnétique oscillant selon la revendication 11, dans laquelle un élément discoïde, constitué par une paire de disques constitués de matériau non ferromagnétique qui enferme ledit film constitué d'un alliage d'aluminium et de fer comme un sandwich, est inséré à l'intérieur du récipient et s'appuie contre son fond de manière à constituer un élément chauffant quand il est situé à l'intérieur d'un champ magnétique oscillant.
